# EUROPEAN PATENT SPECIFICATION

(11) **EP 2 256 369 B1**
(45) Date of publication and mention of the grant of the patent: **15.08.2012**
(21) Application number: 09719460.9
(22) Date of filing: 10.03.2009
(51) Int. Cl.: F16H 3/091

(54) **DUAL-CLUTCH TRANSMISSION FOR VEHICLE**
FAHRZEUGGETRIEBE MIT DOPPELKUPPLUNG
TRANSMISSION A DOUBLE EMBRAYAGE POUR VEHICULE

(30) Priority: 12.03.2008 JP 2008062719
(43) Date of publication of application: 01.12.2010
(73) Proprietor: Isuzu Motors, Ltd., Shinagawa-Ku Tokyo 140-8722 (JP)
(72) Inventor: KOGA, Hidetaka, Fujisawa-shi Kanagawa 252-8501 (JP)
(74) Representative: MERH-IP Matias Erny Reichl Hoffmann
(86) International application number: PCT/JP2009/054492
(87) International publication number: WO 2009/113513

(56) References cited:
- WO-A1-2005/021999
- DE-A1- 10 310 472
- JP-A- 62 204 036
- JP-A- 2005 265 143
- JP-A- 2008 039 103
- JP-T- 2007 503 559
- JP-T- 2008 530 456
- US-A1- 2005 247 147

## Description

### Technical Field:

This invention relates to a transmission in a power transmission device of vehicles, i.e., to a dual clutch type transmission having two transmission input shafts coupled to an engine, respectively, through friction clutches and for changing the speed while controlling the engaging states of the two friction clutches at the time of changing the speed, according to the preamble of claim 1 as it is disclosed in WO 2005021999A. Background Art:

In order to facilitate the driving of vehicles and to reduce fatigue to the drivers in recent years, there have been developed a variety of kinds of automatic power transmission devices for automotive use. A representative example may be an automatic transmission combining a torque converter and a planetary gear mechanism together, as is now widely used as a power transmission of the so-called automatic transmission vehicles (AT vehicles). In addition to the automatic transmissions, there is also available a power transmission that uses a transmission of the type of parallel shaft gear mechanism as used in the manual transmission vehicles (MT Vehicles) in combination with an automatically operated clutch to shift the gear in response to a speed-change instruction from an electronic controller or the like.

In an automatic speed-changing device using a transmission of the type of parallel shaft gear mechanism, there is no loss of transmission caused by the interposition of the torque converter more excelling in fuel economy of the vehicles than the automatic transmissions but producing a larger shock of change than that of the automatic transmissions. In the transmission of the type of parallel shaft gear mechanism, a plurality of gear trains are provided between a main shaft and an intermediate shaft (counter shaft) arranged in parallel with each other, and the engine power is transmitted from one gear train to an output shaft by using a dog clutch equipped with a speed-changing sleeve. At the time of changing the speed, a friction clutch is disconnected between the engine and the transmission to shift the gear train to which the speed-changing sleeve comes in mesh. Therefore, the transmission of power is interrupted for a short period of time. In the automatic transmission in which the torque converter is interposed, on the other hand, the transmission of power is not substantially interrupted even at the time of changing the speed, and a little shock is produced by the change of speed.

As the transmission of the type of parallel shaft gear mechanism, there has been known a transmission called dual clutch type transmission (or twin clutch type transmission) equipped with two friction clutches and two transmission input shafts coupled to the respective friction clutches to prevent the shock by continuing the transmission of power even at the time of changing the speed as disclosed by, for example, JP-A-8-320054. Further, JP-T-2007-503559 discloses a dual clutch type transmission having gears of seven forward speeds and three reverse speeds.

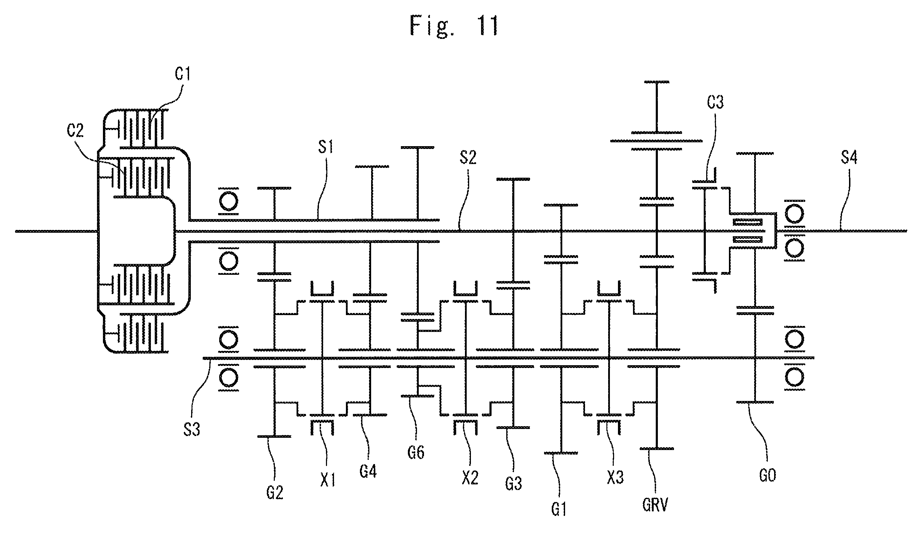

In the dual clutch type transmission as shown in Fig. 11, a first input shaft S1 and a second input shaft S2 are arranged to constitute a double tubular structure, the second input shaft S2 extending rearward penetrating through the first hollow input shaft S1. In front of the transmission, there are arranged a first friction clutch C1 and a second friction clutch C2 on the inner side and on the outer circumferential side in concentric, and the input sides of the respective friction clutches are connected to the engine output shaft. The friction clutches in this example are wet type multiple disk clutches, the output shaft of the first friction clutch C1 being integrally coupled to the first hollow input shaft S1 and the output shaft of the second friction clutch C2 being integrally coupled to the second input shaft S2. The two friction clutches may be arranged in parallel in the axial direction instead of being arranged in concentric, and the dry type single disk clutches may be used instead of the wet type multiple disk clutches.

An intermediate shaft (counter shaft) S3 is arranged in parallel with the first input shaft S1 and the second input shaft S2. On each input shaft, there are arranged the gear trains of every other speeds relative to the intermediate shaft. The dual clutch type transmission of Fig. 11 has six forward gears (inclusive of a directly coupled gear) and a reverse gear. On the first hollow input shaft S1, there are arranged fixed gears of even speeds, such as a second speed gear train G2, a fourth speed gear train G4 and a sixth speed gear train G6. On the second input shaft S2, on the other hand, there are arranged a first speed gear train G1 and a third speed gear train G3 which are the odd speed gears, as well as a fixed gear of a reverse gear train GRV. The fixed gears are in mesh with free-fit gears that are freely fitted to the intermediate shaft S3, i.e., that are rotatably fitted thereto. At the rear end of the intermediate shaft S3, further, there is provided an output shaft drive gear train GO for driving the output shaft S4 by reducing the speed and at the rear end of the second input shaft S2, there is provided a direct connection clutch C3 which is the dog clutch and is directly coupled as the fifth gear of the transmission to the output shaft S4.

The gears freely fitted to the intermediate shaft S3 have dog gears (gear splines) formed integrally therewith. On the intermediate shaft S3, further, there are installed a second speed-fourth speed changing device X1, a sixth speed-third speed changing device X2 and a first speed-reverse gear changing device X3. These changing devices are constituted as dog clutches having speed-changing sleeves to mesh with dog teeth and synchronizer mechanisms, that are, usually, used in the transmission of the type of parallel shaft gear mechanism. In the transmission of Fig. 11, the free-fit gears and the dog clutches are installed on the intermediate shaft S3. However, the gears of the intermediate shaft S3 may be the fixed gears, and the gears on the first input shaft S1 and on the second input shaft S2 may be the free-fit gears, and the dog clutches may be formed thereon.

In the dual clutch type transmission, if, for example, the vehicle is traveling at the second speed, the first friction clutch C1 is connected while the second friction clutch C2 is disconnected, and the second speed-fourth speed changing device X1 is in mesh with the second speed gear train G2. The engine power drives the intermediate shaft S3 through the first input shaft S1 coupled to the first friction clutch C1 and through the second speed gear train G2 and, further, drives the output shaft S4 through the output shaft drive gear train GO at the rear end. To shift the second speed to the third speed, the first friction clutch C1 is disconnected, the sixth speed-third speed changing device X2 is brought in mesh with the third speed gear train G3, and the second friction clutch C2 is connected. After the gear has been shifted, the engine power is transmitted to the intermediate shaft S3 through the second input shaft S2 and through the third speed gear train G3, and drives the output shaft S4 through the output shaft drive gear train GO.

The dual clutch type transmission includes the first input shaft S1 and the second input shaft S2 coupled to the friction clutches, respectively, the input shafts being allowed to rotate independently of each other. At the time of shifting the second speed to the third speed, therefore, it becomes possible to bring the sixth speed-third speed changing device X2 in mesh with the third speed gear train G3 prior to disconnecting the first friction clutch C1 and prior to disengaging the second speed-fourth speed changing device X1. Thus, after having brought the sixth speed-third speed changing device X2 in mesh with the third speed gear train, if the engaging states of the two friction clutches are so controlled as to connect the second friction clutch C2 while disconnecting the first friction clutch C1, then the gear is shifted without substantially interrupting the transmission of engine power and, therefore, the speed is changed free of shock of change. When the changing device is brought in mesh with the third speed gear train G3, further, the synchronizer mechanism is operated. Here, however, the time margin is large for synchronization. If compared with the synchronizer mechanism in ordinary transmissions of the type of parallel shaft gear mechanisms, therefore, it is allowed to decrease the load such as frictional force acting on the synchronizer mechanism.
Patent document 1: JP-A-8-320054
Patent document 2: JP-T-2007-503559

### Disclosure of the Invention:

### Problems that the Invention is to Solve:

The dual clutch type transmission has two input shafts of a double tubular structure, the input shafts having an odd number of gear trains and an even number of gear trains in a divided manner in series and corresponding to the number of speeds of the transmission, and at the rear portions thereof is arranged an output shaft drive gear train. Therefore, the input shafts and the intermediate shaft become lengthy, the distance increases among the bearings disposed at both ends of each of the shafts, and the transmission as a whole becomes lengthy in the axial direction. In order to smoothly transmit power while supporting lengthy input shafts and intermediate shaft yet maintaining their flexural rigidity, it, in practice, becomes necessary to install bearings at the intermediate portions of the shafts, further, causing the transmission to become longer in the axial direction and to become heavier. Vehicles have a limited space for mounting the transmission, and difficulty is involved if it is attempted to mount a transmission which is longer in the axial direction.

Further, it is desired that a transmission used for trucks and the like has an increased number of speeds to suitably meet a change in the loadage and traveling condition of the vehicle and to increase a reduction ratio between the maximum speed gear and the minimum speed gear. To increase the reduction ratio, however, it becomes necessary to use a gear of a large outer diameter for the gear train of the low speed causing an increase in the distance between the main shaft and the intermediate shaft. Therefore, the reduction ratio of the transmission is often limited by the space for mounting.

The dual clutch type transmission disclosed in the patent document 2 has many speeds, i.e., seven forward speeds and three reverse speeds. In this dual clutch type transmission, the intermediate shafts, too, have a double tubular structure in parallel with the input shafts of the double tubular structure, and two dog clutches are provided for the input shafts and for the intermediate shafts, respectively. This constitution enables the length of the transmission to be shortened in the axial direction. However, the output shaft of this transmission is of a complex structure extending up to the front part of the transmission, and the dog clutches require a complex operation for changing the speed.
The problem of the present invention, therefore, is to provide a dual clutch type transmission having many speeds, wherein the transmission is constructed in a compact size having a decreased length in the axial direction, the output shaft has a simplified structure facilitating the maintenance of the transmission, and the dog clutches require a simplified operation for changing the speed.

### Means for Solving the Problems:

In view of the above problem according to the present invention, an intermediate shaft of a double tubular structure is arranged in a dual clutch type transmission, an output shaft drive gear train that is connected to the output shaft is provided on an end portion of a center shaft thereof, and reduction means is provided on the intermediate shaft to change over a low speed and a high speed making it possible to increase the number of speeds. That is, the present invention is concerned with a transmission for vehicles having the features of the claim 1.

As described in claim 2, it is desired that the changeover clutch is a dog clutch equipped with a synchronizer mechanism.

As described in claim 3, the second input shaft is hollow, the first input shaft extends passing through a hollow portion of the second input shaft, and the output shaft is arranged in concentric with the first input shaft and the second input shaft.

As described in claim 4, it is desired that the output shaft drive gear train provided at the other end portion of the center shaft reduces the speed of the center shaft and transmits power to the output shaft.

As described in claim 5, further, it is desired that the speed-changing mechanism has gears of seven speeds, and the center gear is the fourth speed gear.

### Effects of the Invention:

In the dual clutch type transmission of the invention, the intermediate shaft is of the double tubular structure in parallel with the two input shafts, the center shaft thereof being provided, at its one end, with the output shaft drive gear train connected to the output shaft and, at its other end, with the gear train constituting one speed. The hollow outer shaft is provided with a plurality of gears driven by either one of the two input shafts. The center shaft is provided with the reduction gear which reduces the speed of the outer shaft and transmits power thereto and with the changeover clutch. Upon operating the changeover clutch, the center shaft can be changed over to a state in which it is directly coupled to the outer shaft and to a state in which it is driven at a reduced speed. Namely, the reduction gear and the changeover clutch work as a so-called auxiliary transmission for changing over low speed and high speed. This makes it possible to constitute a speed-changing mechanism having gears of an odd number of speeds with the gear train provided on the center shaft as a center.

According to the dual clutch type transmission of the present invention as described above, two speeds are obtained from one gear train by using a reduction gear and a changeover clutch. Therefore, the transmission has a decreased number of gear trains and a decreased size in the axial direction. For example, to constitute seven forward speeds, the dual clutch type transmission so far had to be provided with seven gear trains. By using the speed-changing mechanism of the present invention, however, this can be done by arranging a central gear train (fourth speed), three gear trains and a gear train of reduction gears, omitting two other gear trains. Besides, the gears on the side slower than the central gear receive the engine power via a reduction gear; i.e., the speed is reduced being divided into two steps by two gear trains, and the reduction ratio of each gear train decreases correspondingly. In the dual clutch type transmission of the present invention, therefore, the distance is shortened between center shaft and the two input shafts, and the transmission as a whole is constructed in a small and compact size.

In the dual clutch type transmission of the invention, the output shaft connected to a propeller shaft or the like for driving the wheels is provided by itself at the end portion of the transmission. At the time of maintenance of the transmission, therefore, the work is facilitated for disassembling the transmission by removing the output shaft. At the time of changing the speed, the changeover clutch provided on the intermediate shaft is changed over for the central gear only, and its operation is simple. According to the dual clutch type transmission disclosed in the patent document 2, for instance, the output shaft is extending up to the front portion of the transmission and, therefore, a cumbersome work is required for removing the output shaft and, besides, a complex operation is required for the dog clutches for shifting the speed.

In the invention of claim 2, a dog clutch equipped with a synchronizer mechanism is used as the changeover clutch that is provided in the intermediate shaft. The dog clutch has been widely used for the transmissions, features a high degree of reliability and makes it possible to attain a smooth connection at the time of shifting the connection owing to the action of the synchronizer mechanism.

In the invention of claim 3, the output shaft is arranged in concentric with the two input shafts of the double tubular structure. This arrangement makes it possible to constitute a transmission that is suited for the vehicles of the type of front engine and rear drive (FR). Further, either one of the two input shafts can be coupled to the output shaft, and the dual clutch type transmission can be easily provided with a directly-coupled gear.

In the invention of claim 4, the center shaft is provided, at the other end thereof, with the output shaft drive gear train that reduces the speed and transmits the power to the output shaft and, therefore, the transmission is constructed in the so-called output reduction type. Due to the output shaft reduction gear train, the speed of the output shaft is reduced and an increased torque is transmitted. Therefore, the shaft torque of the intermediate shaft can be decreased, and the shaft diameter and the thickness of the gear (length in the axial direction) can be decreased, enabling the transmission to become light in weight and compact in size.

In the invention of claim 5, the speed-changing mechanism is provided with gears of seven speeds, and the central gear serves as the fourth speed gear. In the dual clutch type transmission, this gear rationally utilizes the dog clutch that has meshing portions arranged on both sides of the speed-changing sleeve.

### Brief Description of the Drawings:

[Fig. 1] is a diagram schematically and entirely illustrating a dual clutch type transmission of the present invention.
[Fig. 2] is a view showing a changeover clutch of the present invention.
[Fig. 3] is a diagram of a table illustrating the operations of the constituent elements with each of the speeds of the present invention.
[Fig. 4] is a diagram illustrating the path of power transmission with the first speed of transmission of the present invention.
[Fig. 5] is a diagram illustrating the path of power transmission with the second speed of transmission of the present invention.
[Fig. 6] is a diagram illustrating the path of power transmission with the third speed of transmission of the present invention.
[Fig. 7] is a diagram illustrating the path of power transmission with the fourth speed of transmission of the present invention.
[Fig. 8] is a diagram illustrating the path of power transmission with the fifth speed of transmission of the present invention.
[Fig. 9] is a diagram illustrating the path of power transmission with the sixth speed of transmission of present the invention.
[Fig. 10] is a diagram illustrating the path of power transmission with the seventh speed of transmission of the present invention.
[Fig. 11] is a diagram schematically and entirely illustrating a conventional dual clutch type transmission.

### Description of Reference Numerals:

- S1: first input shaft
- S2: second input shaft
- S3: intermediate shaft
- S3I: center shaft
- S30: outer shaft
- S4: output shaft
- S5: sleeve shaft
- C1: first friction clutch
- C2: second friction clutch
- CC: changeover clutch
- RG: reduction gear
- G15, G26, G4, G7: gear trains
- X1, X2: (speed)-changing devices
- SL: speed-changing sleeve
- SR: synchronizer ring
- D: dog teeth (gear spline)

### Best Mode for Carrying Out the Invention:

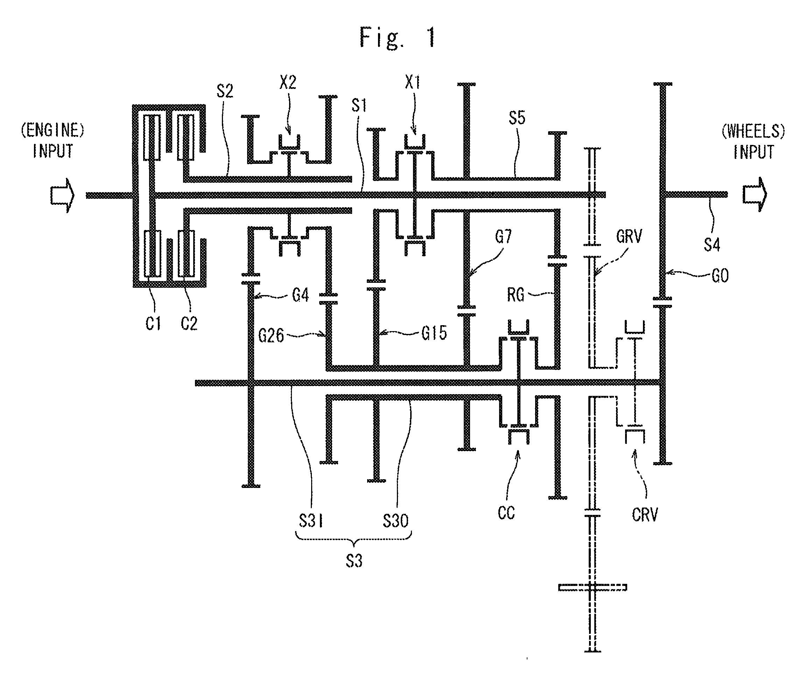

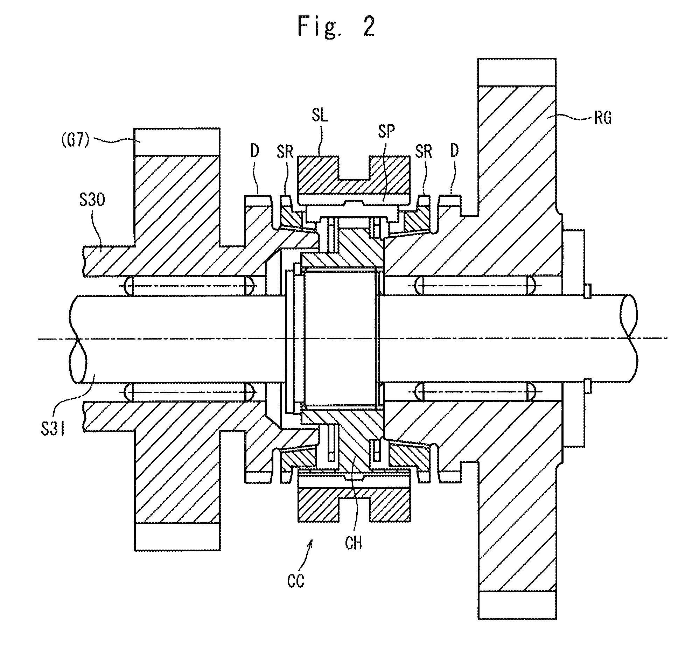

The dual clutch type transmission of the invention will now be described with reference to the drawings. Fig. 1 is a diagram schematically illustrating an embodiment of the dual clutch type transmission of the present invention and Fig. 2 is a view showing the structure of a changeover clutch provided on the intermediate shaft. In Fig. 1, the parts corresponding to the parts in the conventional dual clutch type transmission of Fig. 11 are denoted by the same reference numerals.

In the dual clutch type transmission of this embodiment as shown in Fig. 1, there are arranged a first input shaft S1 and a second input shaft S2 of a double tubular structure, the first input shaft S1 extending rearward penetrating through the hollow second input shaft S2. At the front portions of the input shafts, there are provided a first clutch C1 and a second clutch C2 arranged in parallel in the axial direction, the input sides of the respective friction clutches being connected to an engine output shaft. The output side of the first friction clutch C1 is coupled to the first input shaft S1 integrally therewith, and the output side of the second friction clutch C2 is coupled to the hollow second input shaft S2 integrally therewith. In this embodiment, the two friction clutches are dry type single disk clutches.

In the dual clutch type transmission of the invention, the intermediate shaft (counter shaft) S3 arranged in parallel with the two input shafts is of a double tubular structure. Namely, the intermediate shaft S3 includes a hollow outer shaft S30 and a center shaft S3I which is extending rearward penetrating through the hollow portion of the outer shaft S3O. To the front end portion of the center shaft S3I, there is fixed a fixed gear that constitutes a gear train G4 relative to the second input shaft S2 and to the rear end thereof, there is fixed a fixed gear that constitutes an output shaft drive gear train GO relative to the output shaft S4. The dual clutch type transmission of this embodiment is a transmission of the output reduction type in which the output shaft drive gear train GO transmits power from the center shaft S3I to the output shaft S4 while reducing the speed. To the outer shaft S3O, further, there are fixed three fixed gears that constitute gear trains G15, G26 and G7 relative to the first input shaft S1 or the second input shaft S2. The other gear of the gear train G7 is fixed to an end portion of a hollow sleeve shaft S5 that is freely fitted to the first input shaft S1, and to the other end of the sleeve shaft S5 is fixed a gear that meshes with a reduction gear RG.

The reduction gear RG is freely fitted onto the center shaft S3I at the back of the outer shaft S3O. Between the reduction gear RG and the outer shaft S3O, there is provided a changeover clutch CC that connects the center shaft S3I to either the outer shaft S30 or the reduction gear RG. The changeover clutch CC is the same as the dog clutch that is usually used in the transmission of the type of parallel shaft gear mechanism for shifting the speed, and its structure will be described below with reference to Fig. 2.

Onto the front side of the center shaft S3I, there is rotatably fitted the outer shaft S30 to which the fixed gear of the gear train G7 is fixed, and onto the rear side thereof, there is rotatably fitted the reduction gear RG, the outer shaft S30 and the reduction gear RG having dog teeth D integrally formed together therewith. A clutch hub CH is attached to the center shaft S3I integrally therewith, and a speed-changing sleeve SL equipped with a spline SP that meshes with the dog teeth D is fitted onto the outer circumference of the clutch hub CH so as to slide in the axial direction. Synchronizer rings SR are arranged among the dog teeth D and the speed-changing sleeve SL. Though not shown, a bifurcated speed-changing fork is fitted into the grooves in the outer circumference of the speed-changing sleeve SL to slide the speed-changing sleeve SL in the axial direction.
If the speed-changing sleeve SL is slid leftward in the drawing by using the speed-changing fork, the spline SP of the speed-changing sleeve SL meshes with the dog teeth D of the outer shaft S3O, and the center shaft S3I is connected to the outer shaft S3O. Here, the synchronizer ring SR blocks the motion of the speed-changing sleeve SL until the rotational speed of the outer shaft S30 comes in synchronism with the rotational speed of the center shaft S3I. If the speed-changing sleeve SL is slid rightward in the drawing, then the speed-changing sleeve SL comes in mesh with the dog teeth D of the reduction gear RG, and the center shaft S3I is connected to the reduction gear RG.

If further described reverting to Fig. 1, onto the first input shaft S1, there are freely fitted one gear of the gear train G15 and the sleeve shaft S5 to which one gear of the gear train G7 is fixed. Onto the second input shaft S2, further, one gear of the gear train G4 and one gear of the gear train G26 are freely fitted. The devices X1 and X2 for changing the speed are arranged between the gear train G15 and the gear train G7 (front end of the sleeve shaft S5) and between the gear train G4 and the gear train G26, respectively. These changing devices are constituted in the same manner as the changeover clutch CC shown in Fig. 2. For example, if the speed-changing sleeve of the changing device X1 is moved leftward, the first input shaft S1 is connected to the gear train G15. If it is moved rightward, the first input shaft S1 is connected to the gear train G7.

Upon combining the gear trains G15, G26 and gear train of the sleeve shaft S5 with the changeover clutch CC, each gear train constitutes high and low two speeds. Upon further being combined with the gear train G4 provided at the front end of the center shaft S3I, the dual clutch type transmission of this embodiment offers seven forward speeds.
As described above, the dual clutch type transmission of the present invention has a speed-changing mechanism that constitutes an odd number of speeds, and a gear train is provided on one end portion of the center shaft S3I to constitute a central speed of the odd number of speeds. With one gear train being used by two speeds, it is made possible to decrease the number of the gear trains and to shorten the length of the transmission in the axial direction. As represented by a two-dot chain line in Fig. 1, the reverse gear of the transmission is constituted by arranging the gear train GRV at the rear end of the first input shaft S1 and connecting it to the center shaft S3I via a dog clutch CRV.

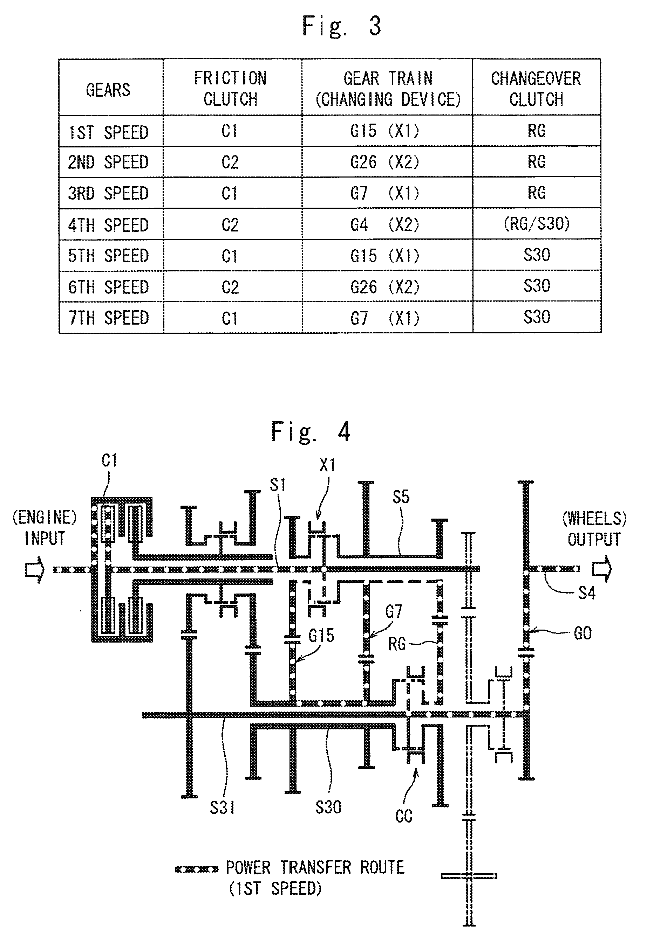

Next, the operation of the dual clutch type transmission of this embodiment will be described with reference to Figs. 3 to 10. Fig. 3 is a table showing the friction clutches C1, C2, gear trains to which the changing devices X1, X2 come in mesh, and members to which the changeover clutch CC is connected, which are used in the transmission of from the first speed to the seventh speed, and Figs. 4 to 10 show the power transmission paths of each of the speeds.

With the first speed, the first friction clutch C1 is connected, the friction clutch C2 is disconnected, the speed-changing sleeve of the changing device X1 is brought in mesh with the gear train G15, and the speed-changing sleeve of the changeover clutch CC is brought in mesh with the reduction gear RG. As shown in Fig. 4, the engine power is transmitted from the first friction clutch C1 that is connected to drive the outer shaft S30 of the intermediate shaft S3 through the first input shaft S1, changing device X1 and gear train G15. The engine power is, further, transmitted to the center shaft S3I through the gear train G7, sleeve shaft S5 and reduction gear RG, and is finally transmitted through the output shaft drive gear train GO to drive the output shaft S4. The reduction ratio of the gear train G15 is set to be larger than those of the gear grains G26 and G7, and the rotational speed of the input shaft is reduced through two steps, i.e., reduced through the gear train G15 and reaction means made up of the gear train G7 and the reduction gear RG, and the torque that is transmitted increases in inverse proportion thereto. Since the speed is reduced in two steps, the reduction ratio of the gear train G15 by itself does not have to be so greatly set, and the distance can be decreased between the first input shaft S1 and the intermediate shaft S3. With the transmission for trucks, the vehicle, usually, starts with the second speed, and the first speed is designed as a gear for use when the vehicle starts moving on the way of a climbing road carrying large loadage.

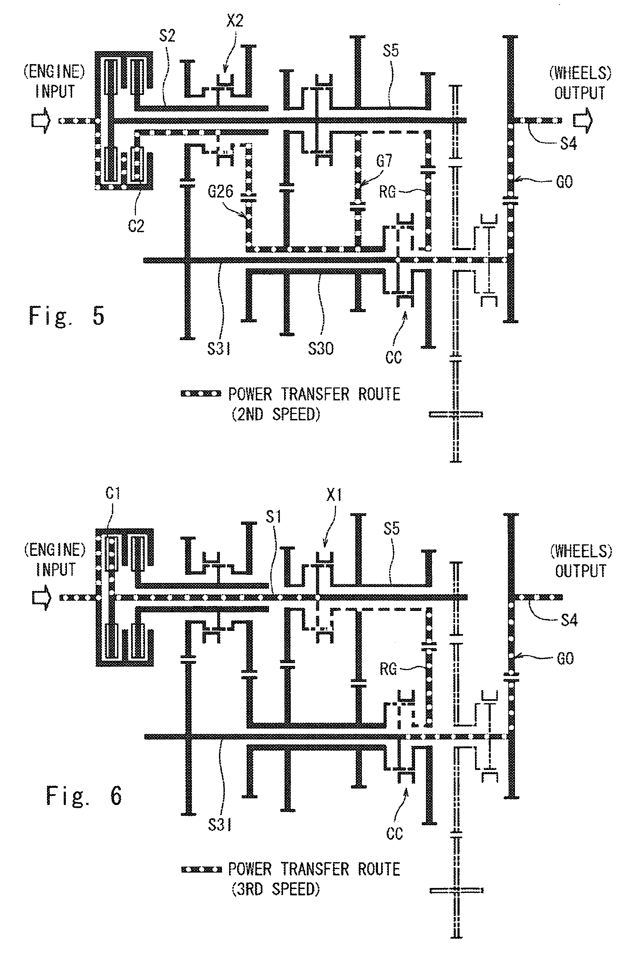

With the second speed, the second friction clutch C2 is connected, the first friction clutch C1 is disconnected, the speed-changing sleeve of the changing device X2 is brought in mesh with the gear train G26, and the speed-changing sleeve of the changeover clutch CC is brought in mesh with the reduction gear RG. As shown in Fig. 5, the engine power is transmitted from the second friction clutch C2 that is connected to drive the outer shaft S30 through the second input shaft S2, changing device X2 and gear train G26, is, further, transmitted to the center shaft S3I through the gear train G7, sleeve shaft S5 and reduction gear RG like in the case of the first speed, and is finally transmitted through the output shaft drive gear train GO to drive the output shaft S4. With the second speed, the first friction clutch C1 is disconnected and the first input shaft S1 is allowed to rotate freely and independently. When the vehicle accelerates such as at the start, therefore, the changing device X1 for shifting up to the third speed can be brought in mesh with the gear train G7 (sleeve shaft S5) in advance. In the dual clutch type transmission as described above, the changing device can be changed over prior to the shift-up, and the shift-up is executed by controlling the engaging state of the two friction clutches. Therefore, the shift-up is smoothly accomplished without substantially interrupting the engine power.

With the third speed, the first friction clutch C1 is connected and the second friction clutch C2 is disconnected. In this case, the speed-changing sleeve of the changing device X1 has already been brought in mesh with the gear train G7 (sleeve shaft S5), and, as shown in Fig. 6, the engine power is transmitted to the center shaft S3I through the first input shaft S1, sleeve shaft S5 and reduction gear RG to drive the output shaft S4 through the output shaft drive gear train GO. Namely, the gear train of the reduction gear RG also serves as a gear train for constituting the third speed. While traveling at the third speed, the second input shaft S2 rotates independently and, therefore, the changing device X2 for shift up to the fourth speed is brought in mesh with the gear train G4 in advance.

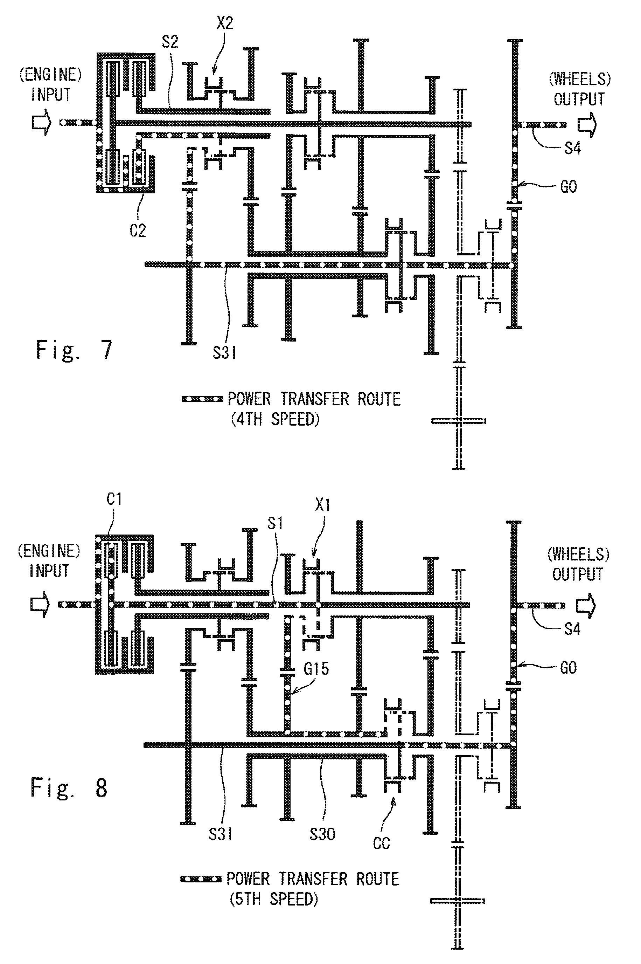

With the fourth speed, the second friction clutch C2 is connected, the first friction clutch C1 is disconnected, and the changeover clutch CC that had been connected to the reduction gear RG up to the third speed is disconnected. The engine power, as shown in Fig. 7, is directly transmitted from the second input shaft S2 to the center shaft S3I through the gear train G4 to drive output shaft S4 through the output shaft drive gear train GO. With the fourth speed, no power is transmitted through the outer shaft S30 or through the reduction gear RG. After the changeover clutch CC is disconnected, therefore, the speed-changing sleeve of the changeover clutch CC is moved to come in mesh with the outer shaft S30 so as to be ready for shift up to the fifth speed. At the same time, the speed-changing sleeve of the changing device X1 is brought in mesh with the gear train G15.

With the fifth speed, the first friction clutch C1 is connected and the second friction clutch C2 is disconnected. The engine power, as shown in Fig. 8, is transmitted from the first input shaft S1 and drives the outer shaft S30 through the gear train G15 that has been brought in mesh already. The outer shaft S30 is directly coupled to the center shaft S3I through the changeover clutch CC, and the engine power is transmitted from the outer shaft S30 to the center shaft S3I without any change in the rotational speed, and drives the output shaft S4 through the output shaft drive gear train GO. The reduction ratio of the gear train G15 has been set to be smaller than that of the gear train G4 and, therefore, the rotational speed of the center shaft S3I directly coupled to the outer shaft S30 at the fifth speed is greater than the rotational speed at the fourth speed. With the fifth speed, the changing device X2 for shift up to the sixth speed is brought in mesh with the gear train G26 in advance.

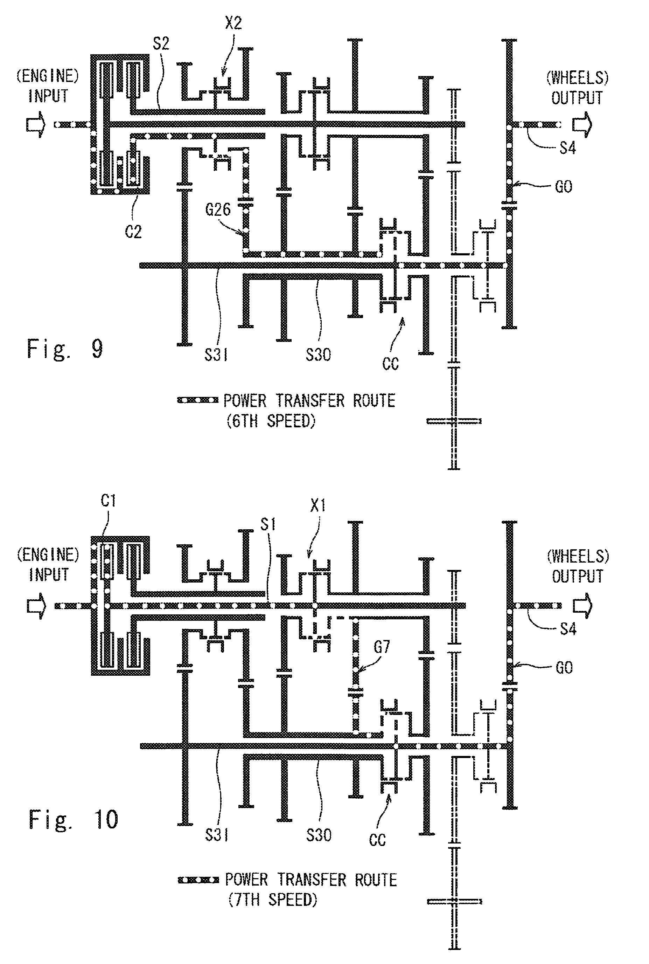

With the sixth and seventh speeds, the same operations as those described above are executed, and the engine power is transmitted to the output shaft S4 through paths as shown in Figs. 9 and 10, respectively. With the sixth and seventh speeds, the changeover clutch CC meshes with the outer shaft S30 like with the fifth speed, and the outer shaft S30 and the center shaft S3I are maintained in the directly coupled state. The changeover clutch CC is changed over for only the fourth speed gear which is the central gear. Therefore, the changeover clutch CC is operated less frequently and needs a simple control mechanism.
To back the vehicle, the first friction clutch C1 is connected, the dog clutch CRV is connected, and the changeover clutch CC is disconnected. The engine power drives the center shaft S3I in the same direction as the first input shaft S1 through the gear train GRV arranged at the rear end of the first input shaft S1 and, further, drives the output shaft S4 in the opposite direction through the output shaft drive gear train GO. In this embodiment, the gear train of the reverse gear is arranged at the rear end of the first input shaft S1. The gear train of the reverse gear, however, may be arranged at the front end of the second input shaft S2 to transmit the engine power through the second friction clutch C2.

### Industrial Applicability:

According to the present invention as described above in detail, an intermediate shaft of a double tubular structure is arranged in a dual clutch type transmission that has two input shafts coupled to two friction clutches, and a changeover clutch for changing over a low speed and a high speed is provided to constitute a speed-changing mechanism having an odd number of speeds. It is, therefore, obvious that the present invention can be industrially utilized as a transmission mounted on vehicles.
Though the above embodiment has described the speed-changing mechanism having seven speeds, many more speeds can be constituted by adding gear trains and changing devices. In the above embodiment, further, free-fit gears and changing devices are arranged on two input shafts. However, the embodiment can be modified in a variety of ways by, for example, arranging the free-fit gears on the intermediate shaft, or by directly coupling the first input shaft and the output shaft together through a dog clutch like in the conventional dual clutch type transmission shown in Fig. 11.

## Claims

1. A transmission for vehicles having a first input shaft (S1) and a second input shaft (S2) coupled to an engine via friction clutches (C1, C2), respectively, and having an output shaft (S4) for transmitting power to the wheels, wherein:
said transmission for vehicles has a speed-changing mechanism constituting gears of an odd number of speeds;
said speed-changing mechanism has an intermediate shaft (S3) including a hollow outer shaft (S3O) and a center shaft (S3I) extending through the hollow portion of said outer shaft (S3O) in parallel with said first input shaft (S1) and said second input shaft (S2);
said outer shaft (S3O) is provided with a plurality of gears that mesh with gears driven by said first input shaft (S1) or said second input shaft (S2) to constitute gear trains (G15, G26, G7) of a plurality of speeds; and
a reduction gear (RG) is freely fitted onto said center shaft (S3I) to reduce the speed of said outer shaft (S3O) and to transmit power thereto, and a changeover clutch (CC) is provided between said outer shaft (S3O) and said reduction gear (RG) to connect said center shaft (S3I) to said outer shaft (S3O) or to said reduction gear (RG), and **characterized in that** said center shaft (S3I) is provided, at its one end portion, with a gear train (G4) that constitutes a center gear in the odd number of speeds and is provided, at its other end portion, with an output shaft drive gear train (GO) for transmitting power to said output shaft (S4).

2. The transmission for vehicles according to claim 1, wherein said changeover clutch (CC) is a dog clutch equipped with a synchronizer mechanism.

3. The transmission for vehicles according to claim 1, wherein said second input shaft (S2) is hollow, said first input shaft (S1) extends passing through the hollow portion of said second input shaft (S2), and said output shaft (S4) is arranged in concentric with said first input shaft (S1) and said second input shaft (S2).

4. The transmission for vehicles according to claim 1, wherein the output shaft drive gear train (GO) provided at the other end portion of said center shaft (S3I) reduces the speed of said center shaft (S3I) and transmits power to said output shaft (S4).

5. The transmission for vehicles according to claim 1, wherein said speed-changing mechanism has gears of seven speeds, and the center gear is the fourth speed gear.

## Patentansprüche

1. Getriebe für Fahrzeuge mit einer ersten Antriebswelle (S1) und einer zweiten Antriebswelle (S2), die jeweils über Reibungskupplungen (C1, C2) mit einem Motor gekoppelt sind, und mit einer Abtriebswelle (S4) zum Übertragen von Leistung auf die Räder, wobei:
das Getriebe für Fahrzeuge einen Gangschaltmechanismus hat, der Räder mit einer ungeraden Anzahl von Gängen bildet;
der Gangschaltmechanismus eine Zwischenwelle (S3) hat, die eine hohle Außenwelle (S30) und eine Mittelwelle (S31) einschließt, die durch den hohlen Abschnitt der Außenwelle (S30) parallel zur ersten Antriebswelle (S1) und zur zweiten Antriebswelle (S2) verläuft;
die Außenwelle (S30) mit mehreren Rädern versehen ist, die mit Rädern Im Eingriff sind, die von der ersten Antriebswelle (S1) oder der zweiten Antriebswelle (S2) angetrieben werden, um Getriebezüge (G15, G26, G7) aus mehreren Gängen zu bilden; und
ein Untersetzungsrad (RG) frei auf der Mittelwelle (S31) angebracht ist, um die Geschwindigkeit der Außenwelle (S30) zu reduzieren und Leistung auf diese zu übertragen, und eine Umschaltkupplung (CC) zwischen der Außenwelle (S30) und dem Untersetzungsrad (RG) vorgesehen ist, um die Mittelwelle (S31) mit der Außenwelle (S30) oder mit dem Untersetzungsrad (RG) zu verbinden, und **dadurch gekennzeichnet, dass** die Mittelwelle (S31) an einem Endabschnitt mit einem Getriebezug (G4) versehen ist, der ein Mittelrad in der ungeraden Anzahl von Gängen bildet, und an ihrem anderen Endabschnitt mit einem Abtriebswellenantrieb-Getriebezug (GO) zum Übertragen von Leistung auf die Abtriebswelle (S4) versehen ist.

2. Getriebe für Fahrzeuge nach Anspruch 1, wobei die Umschaltkupplung (CC) eine Klauenkupplung ist, die mit einem Synchronmechanismus ausgestattet ist.

3. Getriebe für Fahrzeuge nach Anspruch 1, wobei die zweite Antriebswelle (S2) hohl ist, die erste Antriebswelle (S1) durch den hohlen Abschnitt der zweiten Antriebswelle (S2) hindurchgehend verläuft und die Abtriebswelle (S4) konzentrisch mit der ersten Antriebswelle (S1) und der zweiten Antriebswelle (52) angeordnet ist.

4. Getriebe für Fahrzeuge nach Anspruch 1, wobei der am anderen Endabschnitt der Mittelwelle (S31) vorgesehene Abtriebswellenantrieb-Getriebezug (GO) die Geschwindigkeit der Mittelwelle (S31) reduziert und Leistung auf die Abtriebswelle (S4) überträgt.

5. Getriebe für Fahrzeuge nach Anspruch 1, wobei der Gangschaltmechanismus Räder von sieben Gängen hat und das Mittelrad das Rad des vierten Ganges ist.

## Revendications

1. Transmission pour véhicules ayant un premier arbre d'entrée (S1) et un second arbre d'entrée (S2) respectivement accouplés avec un moteur à l'aide d'embrayages à friction (C1, C2) et ayant un arbre de sortie (S4) pour la transmission de puissance aux roues, dans laquelle :
ladite transmission pour véhicules a un mécanisme de changement de vitesse composé de pignons d'un nombre impair de vitesses ;
ledit mécanisme de changement de vitesse a un arbre intermédiaire (S3) comprenant un arbre extérieur creux (S30) et un arbre central (S3I) s'étendant à travers la partie creuse dudit arbre extérieur (S30) parallèlement audit premier arbre d'entrée (S1) et audit second arbre d'entrée (S2) ;
ledit arbre extérieur (S30) est muni d'une pluralité de pignons qui engrènent avec des pignons entraînés par ledit premier arbre d'entrée (S1) ou ledit second arbre d'entrée (S2) pour constituer des trains d'engrenages (G15, G26, G7) d'une pluralité de vitesses ; et
un réducteur de vitesse (RG) est monté librement sur ledit arbre central (S3I) afin de réduire la vitesse dudit arbre extérieur (S3O) et transmettre de la puissance à celui-ci, et un embrayage de commutation (CC) est disposé entre ledit arbre extérieur (S3O) et ledit réducteur de vitesse (RG) afin d'accoupler ledit arbre central (S3I) avec ledit arbre extérieur (S3O) ou ledit réducteur de vitesse (RG), et **caractérisée en ce que** ledit arbre central (S3I) est pourvu, à sa première extrémité, d'un train d'engrenages (G4) qui constitue un pignon central dans le nombre impair de vitesses et est pourvu, à son autre extrémité, d'un train d'engrenages (GO) d'entraînement d'arbre de sortie pour transmettre de la puissance audit arbre de sortie (S4).

2. Transmission pour véhicules selon la revendication 1, dans laquelle ledit embrayage de commutation (CC) est un embrayage à griffes équipé d'un mécanisme de synchronisation.

3. Transmission pour véhicules selon la revendication 1, dans laquelle ledit second arbre d'entrée (S2) est creux, ledit premier arbre d'entrée (S1) passe dans la partie creuse dudit second arbre d'entrée (S2), et ledit arbre de sortie (S4) est disposé concentriquement audit premier arbre d'entrée (S1) et audit second arbre d'entrée (S2).

4. Transmission pour véhicules selon la revendication 1, dans laquelle le train d'engrenages (GO) d'entraînement d'arbre de sortie disposé à l'autre extrémité dudit arbre central (S3I) réduit la vitesse dudit arbre central (S3I) et transmet de la puissance audit arbre de sortie (S4).

5. Transmission pour véhicules selon la revendication 1, dans laquelle ledit mécanisme de changement de vitesse a des pignons de sept vitesses, et le pignon central est le pignon de quatrième vitesse.
